# EUROPEAN PATENT SPECIFICATION

(11) **EP 3 244 115 B1**
(45) Date of publication and mention of the grant of the patent: **24.06.2020**
(21) Application number: 16168922.9
(22) Date of filing: 10.05.2016
(51) Int. Cl.: F16L 37/35

(54) **KIT COMPRISING A PLURALITY OF MALE COUPLINGS WITH AN INTEGRATED SHUNT SYSTEM FOR ACHIEVING A SHUNT FUNCTION ON THE MOVABLE SIDE OF A MULTI-COUPLING DEVICE AND MULTI-COUPLING DEVICE COMPRISING SAID KIT**
KIT MIT MEHREREN STECKKUPPLUNGEN MIT EINEM INTEGRIERTEN ABLEITUNGSSYSTEM ZUR ERREICHUNG EINER NEBENSCHLUSSFUNKTION AUF DER BEWEGLICHEN SEITE EINER MULTIKUPPLUNGSVORRICHTUNG UND MULTIKUPPLUNGSVORRICHTUNG MIT BESAGTEM KIT
ENSEMBLE COMPRENANT UNE PLURALITÉ DE RACCORDS MÂLES AVEC SYSTÈME DE DÉRIVATION INTÉGRÉ PERMETTANT D'OBTENIR UNE FONCTION DE DÉRIVATION SUR LE CÔTÉ MOBILE D'UN DISPOSITIF MULTIPLE ET DISPOSITIF MULTIPLE COMPRENANT LEDIT ENSEMBLE

(43) Date of publication of application: 15.11.2017
(73) Proprietor: FASTER S.r.l., 26027 Rivolta d'Adda (IT)
(72) Inventor: SORBI, Roberto, 26027 RIVOLTA D'ADDA (IT); NERI, Marco, 26027 RIVOLTA D'ADDA (IT); RUSCONI, Paolo, 26027 RIVOLTA D'ADDA (IT)
(74) Representative: Lualdi, Lorenzo

(56) References cited:
- DE-A1- 10 236 059
- US-A1- 2013 206 261
- US-A1- 2016 109 044

## Description

### FIELD OF THE INVENTION

The present invention relates to a kit comprising a connection plate and a plurality of male couplings inserted in seats thereof, with an integrated shunt system for the application on a multi-coupling plate device, as well as a multi-coupling device comprising said kit with an integrated shunt system, a movable plate supporting the male couplings and a fixed plate supporting female couplings adapted to be connected to the male couplings.

The field of the invention is thus that of multi-coupling plate devices of the type which is the object of the previous patents owned by the same Applicant, which have become the benchmark for plate devices adapted to connect a plurality of hydraulic lines simultaneously.

The present invention relates to a further improvement of the prior art because, by virtue of the kit comprising male couplings and a connection plate with an integrated shunt system according to the present invention, it is possible to establish the connection between two hydraulic lines of the movable plate with the plates disconnected.

### PRIOR ART

The male coupling according to the present invention is specifically applied to multi-coupling devices of the plate type, made by the same Applicant and which have been known in the sector for several years also with the commercial name of "Multifaster".

Said multi-coupling devices comprise a first plate, intended to be fixed on the machine side, and thus also named fixed plate, configured to support a plurality of female couplings, and a second plate intended to be connected to the user, and thus also named movable plate, configured to support a plurality of male couplings. Typically, the movable plate is fastened onto the fixed plate by means of a cam and lever connection system, and the connection of the male couplings and the female couplings present on the respective plates occurs simultaneously.

In the multi-coupling devices of the type known in the prior art, a shunt system is provided in some cases exclusively between the female couplings of the fixed plate and thus devices and couplings capable of implementing the function that the following inventions aims to achieve are known in the prior art.

In the multi-coupling devices of known type of the prior art in which a shunt system is present on the fixed plate side, the fixed plate itself is exploited to convey the fluid from one female coupling to another, but it is not possible to have the shunt function actuated during the connection and/or disconnection maneuver on the movable plate side without the aid of valves or similar additional devices.

US 2016/109044 discloses a multi-coupling plate device comprising a fixed plate supporting a plurality of female couplings and a movable plate supporting a plurality of male couplings adapted to be connected to the female couplings.

### SUMMARY

It is thus the task of the present invention to overcome the limits of the multi-coupling devices of known type by implementing the shunt function on the movable plate side, i.e. on the plate configured to support a plurality of male couplings.

In the scope of such a task, it is the object of the present invention to provide a kit comprising a plurality of male couplings with integrated shunt system and a connection plate configured to be connected to the movable plate of a multi-coupling plate device.

This task and these and other objects which will be clarified in greater detail hereinafter are achieved by a male coupling of the type comprising a main body having substantially cylindrical hollow and longitudinally extending form, which encloses within the components of the coupling, such as an axial valve body axially movable with respect to said main body and an inner slider, also axially movable with respect to said main body. Said main body advantageously has a front end adapted to couple in a female coupling and a rear end to which a rear adapter is advantageously associated in stable manner.

The main body comprises at least one substantially radial hole for the fluid shunt and comprises a lip seal interposed between said main body and said rear adapter and adapted to achieve the fluid sealing selectively against the outer surface of said inner slider.

The presence of the lip seal is an element which allows the desired shunt function.

More in particular, as can be seen in greater detail below, said seal provides its fluid sealing function only in given positions of the inner slider, allowing the passage of the fluid through said at least one radial hole with the coupling uncoupled.

### LIST OF FIGURES

Further features and advantages of the present invention will be more apparent from the following detailed description, provided by way of non-limiting example and illustrated in the accompanying figures, in which:
figure 1 shows a perspective partial section view of the male coupling with integrated shunt system;
figure 2 shows the kit according to the present invention comprising two male couplings with integrated shunt system in figure 1 and the connection plate, associated with the movable plate of a multi-coupling plate device and in a first step of connecting to corresponding female couplings accommodated in a fixed plate of said multi-coupling plate device. During this step, the shunt system present on the male couplings according to the present invention is open;
figure 3 shows the same components shown in figure 2 during a step of subsequent connecting of the couplings. Also during this step, the shunt system present on the male couplings according to the present invention is still open;
figure 4 shows the same components in figure 3 in a subsequent step of connecting of the couplings, in which the valves of the male couplings are still closed and the shunt system is still open;
figure 5 shows the same components as shown in figure 4 in a subsequent step of connecting of the couplings, in which the valves of the male couplings are open and the shunt system is closed. From this moment on, the couplings with integrated shunt system according to the present invention start working as standard male couplings;
figure 6 shows the path of the oil flow in the kit comprising two male couplings with integrated shunt system and the connection plate in the open shunt condition corresponding to the condition in which the plates of the multi-coupling device are disconnected.

### DETAILED DESCRIPTION OF THE INVENTION

The following description will illustrate a preferred embodiment of the kit comprising two male couplings with integrated shunt system and a connection plate.

Such a description is provided by way of non-limiting example.

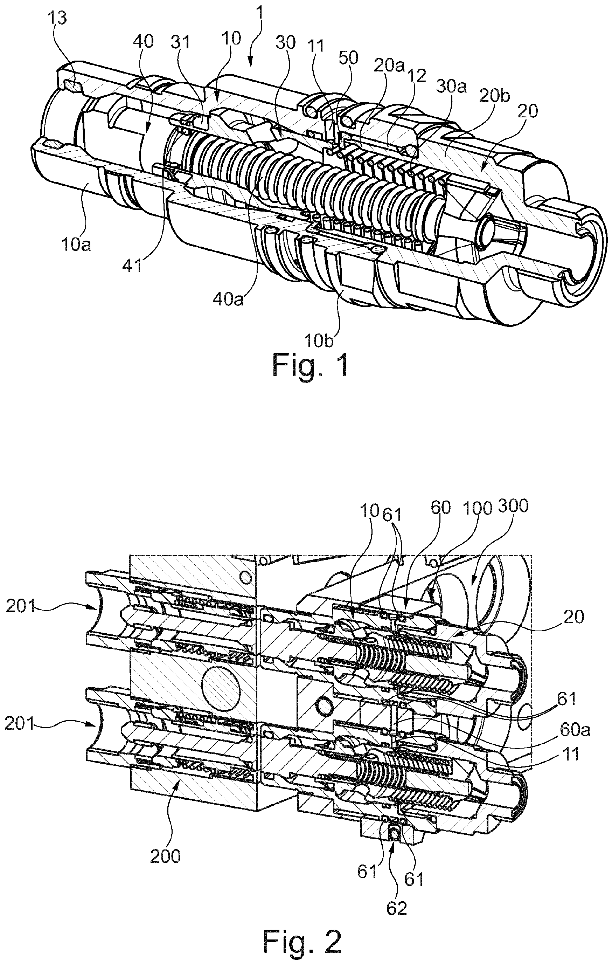

Figure 1 shows a perspective partial section view of a male coupling 1 with integrated shunt system.

The male coupling 1 advantageously comprises at least a main body **10** and an adapter **20,** both having a substantially cylindrical hollow and longitudinally extending form, which enclose the functional components of the coupling. More in particular, said main body **10** will have a front end **10a** adapted to couple in a female coupling and a rear end **10b** to which a rear adapter **20** is advantageously connected.

According to the preferred embodiment shown in the accompanying figures, the main body **10** is connected to said rear adapter **20** by means of a screw connection at said rear end **10b.**

In figure 1, reference numeral **12** generically indicates the threaded connection between said main body 10 and said adapter **20.**

Said main body **10** comprises at least one substantially radial through hole **11,** which puts the part of the coupling **1** inside said main body **10** into connection with the outside for shunting the fluid.

Inside said main body **10** the coupling **1** further comprises a valve body **40.** The inner surface of said main body **10** comprises a housing seat for an annular front seal **13,** which comes into contact with the outer surface of said valve body **40** ensuring the fluid-tightness when the valve body **40** is in the closing condition. Said valve body **40** is axially movable with respect to said main body **10,** and its movement in longitudinal direction towards the rear part of the coupling **1** is opposed by the first helical spring **40a** which tends to take said valve body **40** to advanced position.

In turn, said valve body **40** is at least partially inserted in an inner slider **30,** which also has a substantially cylindrical hollow form and which is axially slidable with respect to said main body **10.** The movement of said inner slider **30** is opposed by the action of the second helical spring **30a,** the action of which tends to take said inner slider back to advanced position.

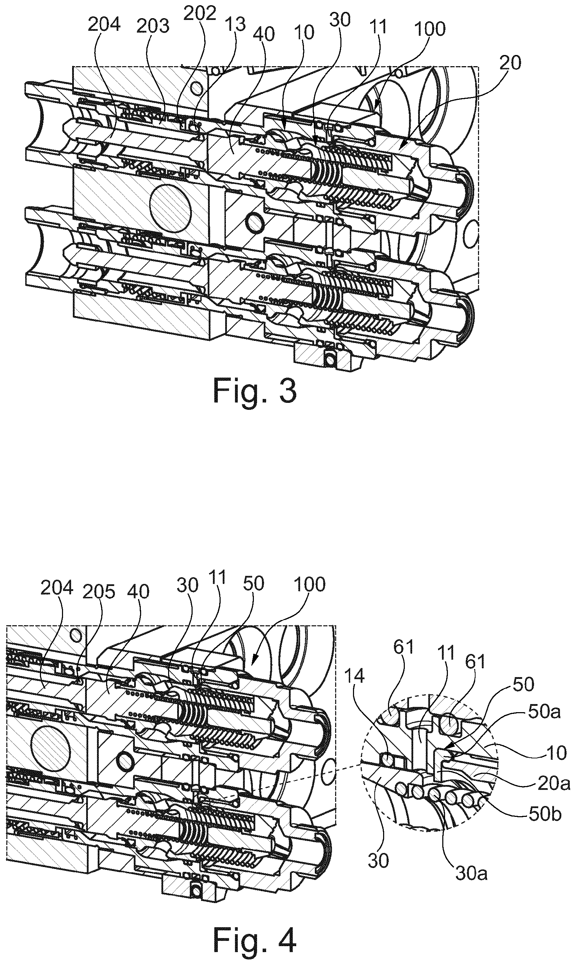

The words "advanced" and "retracted" are defined with reference to the "front" and "rear" part of the coupling: the front part is the one which connects to the female coupling, the rear part is the one connected to the hydraulic line. A position is "advanced" with respect to another when it is closer to the front part of the coupling. So, the valve body **40** is in advanced position when it is in the position shown in figure 2, and is in retracted position with respect to said main body **10** when it is in the position in figure 3.

Turning back to the description of the components of the male coupling **1** as shown in figure 1, said inner slider **30** supports a first seal **31** which ensures the sealing between the outer surface of said inner slider **30** and the inner surface of said main body **10.**

A first sealing ring **41** ensures the fluid sealing between the outer surface of the valve body **40** and the inner surface of said inner slider **30.**

The adapter **20** displays a front portion of the adapter **20a** and a rear portion **20b.** The front portion **20a** of said adapter **20** has a smaller outer diameter than that of the rear portion **20b,** and is inserted at least in part in the rear end **10b** of said main body **10.**

Between said front portion **20a** of said adapter **20** and said rear portion **10b** of said main body **10,** a seal **50** is conveniently provided, preferably a lip seal, the section of which with a longitudinal plane has a profile comprising a first stretch **50a,** which extends in substantially longitudinal direction towards the rear zone of the coupling, and a second stretch **50b,** which extends in substantially radial direction towards the longitudinal axis of the coupling, the profile of the seal **50,** preferably a lip seal, thus being "L"-shaped on a longitudinal plane.

Said lip seal **50** is in position closer to the rear part of the coupling with respect to the radial hole **11,** while a sealing O-ring **14** is provided in position closer to the front part of the coupling with respect to the hole **11.**

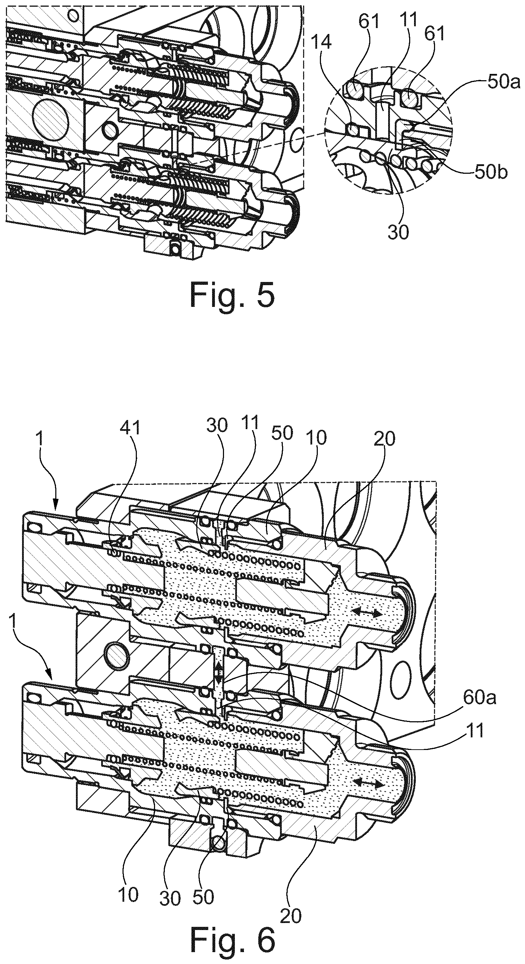

Said lip seal **50** has an annular development, as can be seen more clearly for example from the details in figures 4 and 5.

The second stretch **50b** of said lip seal **50** is thus configured so as to come selectively into contact with the outer surface of said inner slider **30,** thus allowing the oil to flow out through said at least one radial hole **11** provided on said main body **10.**

Thus, having described the main components of the male coupling **1** with integrated shunt system, the additional component which forms the kit **100** according to the present invention will now be described. Said kit **100** comprises a first and a second male coupling **1** with integrated shunt system according to what has been described hereto, and a connection plate **60** configured to establish the hydraulic connection between said two male couplings **1.** Said connection plate **60** being adapted to be installed on the movable plate of a multi-coupling plate connector.

Said connection plate **60** comprises two seats for inserting an equal number of male couplings **1** with integrated shunt system.

More in detail, for example with reference to figures 2 and 3, said connection plate **60** comprises, in turn, at least one shunt conduit **60a,** which is configured to convey the oil coming from the radial hole **11** of the first male coupling **1** towards the second male coupling **1.**

The path of the fluid during the various steps of connecting of the male couplings **1** will be described in greater detail below, while here it is important to describe that the outward sealing is ensured by sealing elements **61,** preferably consisting of O-rings made of polyurethane, and a plug **62,** e.g. of the Koenig-expander type.

The operation of the male couplings **1** and of the kit **100** according to the present invention will now be described in association with a multi-coupling device of the plate type.

With particular reference to figure 2, the kit **100** comprises two male couplings **1** with integrated shunt system and a connection plate **60** in which said couplings **1** are inserted.

Figure 2 shows the fixed plate 200 on which female couplings 201 are installed, and the movable plate 300 on which the kit 100 is installed. Figure 2 shows the first step of coupling, in which the movable plate 300 is approached to the fixed plate 200 until contact is established between the front part of the male 1 and female 201 couplings.

During this step, as can be seen, the shunt is open: the lip seal 50 does not seal against the inner slider **30** which is, in the resting condition corresponding to the position in which the coupling is uncoupled, held in its advanced position by the bias of the second helical spring **30a.**

With reference to figure 3, continuing in the coupling between the main body **10** of the male coupling **1** makes the outer slider **202** of the female coupling **201** retract and forms a seal with the face seal **13** in connection with the inner slider **203** of the female coupling.

Continuing further in the coupling operation, the reference being now to figure 4, the male coupling **1** continues the travel opening the passage of the female coupling, because the valve body **204** with the seal **205** stops forming a seal on the inner surface of the inner slider **203.**

However, the valve of the male coupling **1** is still closed because the first seal **31** ensures the sealing between the outer surface of said inner slider **30** and the inner surface of said main body **10.**

However, the valve body **40** has now reached end of travel and starts pushing the inner slider **30** backwards, too.

During this step, the shunt system is still open, as can be seen in the enlargement in figure 4, in which it is noted that the lip seal **50** no longer connects to the slider **30,** but is close to closing, which occurs after the opening of the valve of the male coupling.

Indeed, in figure 5 it is noted that the passage of oil between the couplings is allowed by the opening also of the valve of the male coupling: by retracting, the valve body **40** of the male coupling pushes the inner slider **30** making it retract and allowing the sealing of the lip seal **50** on the outer surface of the inner slider **30,** thus closing the shunt system, as shown in the enlargement in figure 5.

The male couplings **1** during this step are connected to the female couplings and work as standard male couplings.

The operation of the connection plate **60** of the shunt kit **100** will now be described with reference to figure 6.

When the plates of the multi-coupling device are disconnected, the male couplings **1** are in the condition shown in figures 2 and 6. The shunt system on both male couplings **1** is open, and indeed it is noted that the inner slider **30** is in advanced position and that the lip seal **50** does not seal against the outer surface of the inner slider **30.**

The working fluid, typically pressurized oil, arriving from one of the two hydraulic lines connected to the user and to the adapter **20** of a male coupling, fills the coupling, is sealed in front by the seal **31** which ensures the sealing between the outer surface of said inner slider **30** and the inner surface of said main body **10,** and may solely flow through the radial hole **11** towards the adjacent male coupling **1** through the shunt conduit **60a,** which is configured so as to connect hydraulically the two male couplings **1** and thus to implement the shunt function.

According to a preferred embodiment of the present invention, the lip seal **50** is held in position by virtue of the shape of the seat formed by grooves respectively present on said main body **10** and on said adapter **20.**

The sealing that the lip seal **50** performs on the outer surface of said inner slider **30** allows the shunt function, as seen: when the inner slider **30** is in advanced position the shunt is open and the oil may be short-circuited between the two male couplings **1,** when either one or both the male couplings are connected to the corresponding female coupling the inner slider **30** is pushed into a retracted position, thus closing the shunt.

Of course, the closing of the shunt would not be ensured unless a further O-ring **14** were advantageously provided, with respect to the hole **11** in position closer to the front part of the coupling, to provide the fluid-tightness between said inner slider **30** and said main body **10** thus ensuring that the fluid cannot reach the radial hole **11.**

## Claims

1. A kit (100) for multi-coupling plate devices of the kind comprising a first fixed plate (200) supporting female couplings (201) and a second movable plate (300) supporting male couplings (1) adapted to be connected to the female couplings (201), said kit being adapted to be installed on said movable plate (300) and comprising a connection plate (60) comprising a plurality of seats for supporting a plurality of male couplings (1), the connection plate (60) further comprising at least one shunt conduit (60a), the kit (100) further comprising a plurality of male couplings (1), inserted in said seats, each of said male couplings (1) comprising at least a main body (10) and an adapter (20) both having a substantially cylindrical hollow and longitudinally extending form, wherein said main body (10) comprises a front end (10a), adapted to engage with a female coupling (201), and a rear end (10b), to which said adapter (20) is connected, each of said male couplings (1) further comprising, inside said main body (10) and axially slidable with respect thereto, at least one valve body (40) and at least one inner slider (30), wherein said main body (10) further comprises at least one radial through hole (11), which cooperates with the shunt conduit (60a) to put the inner part of the coupling (1) into connection with the shunt conduit (60a) for shunting a fluid carried by the coupling (1), and wherein, on the inner surface of said main body (10) and next to said radial hole (11), there is provided at least one seal (50) configured to selectively achieve fluid-tightness in connection with the outer surface of said inner slider (30), said kit being thus adapted to provide said movable plate (300) with a shunt function.

2. A kit according to the preceding claim, wherein, for each of said male couplings (1), said seal (50) is a lip seal having an L-shaped profile along a longitudinal section plane.

3. A kit according to the preceding claim, wherein, for each of said male couplings (1), said lip seal (50) comprises a first stretch (50a), which extends in a substantially longitudinal direction towards the rear end (10b) of the coupling, and a second stretch (50b), which extends in a substantially radial direction towards the longitudinal axis of the coupling, said second stretch (50b) of said lip seal (50) being configured so as to come selectively into contact with the outer surface of said inner slider (30), thus closing the passage of a fluid carried by the coupling (1) towards said at least one radial hole (11) provided in said main body (10).

4. A kit according to one or more of the preceding claims, wherein, for each of said male couplings (1), said adapter (20) has a front portion of the adapter (20a) and a rear portion (20b) of the adapter, said front portion (20a) of said adapter (20) having a smaller outer diameter than that of the rear portion (20b) and being inserted at least in part in the rear end (10b) of said main body (10).

5. A kit according to one or more of the preceding claims, wherein, for each of said male couplings (1), said seal (50) is accommodated in a seat formed by grooves present on said main body (10) and on said adapter (20), at the interface between the main body (10) and the adapter (20).

6. A kit according to one or more of the preceding claims, wherein, for each of said male couplings, said main body (10) comprises a face seal (13) inserted in a housing seat obtained on said main body (10).

7. A kit according to one or more of the preceding claims, wherein, for each of said male couplings (1), said valve body (40) is at least partially inserted within said inner slider (30), which is axially movable with respect to said main body (10).

8. A kit according to one or more of the preceding claims, wherein each of said male couplings (1) further comprises at least one O-ring (14) interposed between said inner slider (30) and said main body (10) adapted to achieve fluid-tightness.

9. A multi-coupling device comprising a movable plate (300), a kit (100) according to any of claims 1-8 installed on said movable plate (300), the movable plate supporting the male couplings (1) and a fixed plate (200) supporting female couplings (201) adapted to be connected to the male couplings (1).

## Patentansprüche

1. Set (100) für Multikupplungsplatten-Vorrichtungen der Art, dass es eine erste fixe Platte (200), die Kupplungsbuchsen (201) trägt, und eine zweite bewegliche Platte (300) aufweist, die Kupplungsstecker (1) trägt, die geeignet sind, mit den Kupplungs-buchsen (201) verbunden zu werden,
wobei das Set geeignet ist, um auf der beweglichen Platte (300) installiert zu werden und eine Verbindungsplatte (60) aufweist, die eine Vielzahl von Aufnahmen aufweist, um eine Vielzahl von Kupplungssteckern (1) tragen zu können, wobei die Verbindungs-platte (60) weiter zumindest einen Nebenschlusskanal (60a) aufweist und das Set (100) weiter eine Vielzahl von Kupplungssteckern (1) aufweist, die in die Aufnahmen eingesetzt sind, wobei jeder der Kupplungsstecker (1) zumindest einen Hauptkorpus (10) und einen Adapter (20) aufweist, die beide eine im Wesentlichen zylindrische, hohle und längliche Form haben, wobei der Hauptkorpus (10) ein vorderes Ende (10a) aufweist, das geeignet ist, in eine Kupplungsbuchse (201) einzugreifen, wobei ein hinteres Ende (10b) mit dem der Adapter (20) verbunden ist, wobei
- jeder Kupplungsstecker (1) innerhalb des Hauptkorpus (10) und gegenüber diesem axial verschieblich weiter zumindest einen Ventilkörper (40) und zumindest einen inneren Gleiter (30) aufweist,
- der Hauptkorpus (10) weiter zumindest ein radiales Durchgangsloch (11) aufweist, das mit dem Nebenschlusskanal (60a) zusammenwirkt, um den inneren Teil der Kupplung (1) mit dem Nebenschlusskanal (60a) in Verbindung zu bringen, um eine Flüssigkeit, die von der Kupplung (1) befördert wird, umzuleiten, und
- an der Innenfläche des Hauptkorpus (10) und in der Nähe des radialen Durchgangslochs (11) zumindest eine Dichtung (50) vorgesehen ist, die derart ausgestaltet ist, dass in Verbindung mit der Außenfläche des Innengleiters (30) eine punktuelle Flüssigkeitsdichtheit erreicht wird,
womit das Set geeignet ist, die bewegliche Platte (300) mit einer Nebenschlussfunktion bereitzustellen.

2. Set gemäß Anspruch 1, wobei die Dichtung (50) für jeden Kupplungsstecker (1) eine Lippendichtung mit L-förmigem Profil entlang einer longitudinalen Schnittebene ist.

3. Set gemäß dem vorigen Anspruch, wobei für jeden Kupplungsstecker (1) die Lippendichtung (50) einen ersten Abschnitt (50a), der sich in einer im Wesentlichen Längsrichtung zum hinteren Ende (10b) der Kupplung hin erstreckt und einen zweiten Abschnitt (50b) aufweist, der sich in einer im Wesentlichen radialen Richtung zur Längsachse der Kupplung hin erstreckt, wobei der zweite Abschnitt (50b) der Lippendichtung (50) derart ausgestaltet ist, dass er punktuell mit der Außenfläche des Innengleiters (30) in Kontakt kommt und somit den Durchgang für eine Flüssigkeit, die von dem Kupplung (1) befördert wird, in Richtung des zumindest einen radialen Lochs (11) im Hauptkorpus (10) zu verschließen.

4. Set gemäß einem der vorigen Ansprüche, wobei für jeden Kupplungsstecker (1) der Adapter (20) einen vorderen Bereich des Adapters (20a) und einen hinteren Bereich des Adapters (20b) aufweist, wobei der vordere Bereich (20a) des Adapters (20) einen kleineren Außendurchmesser aufweist als der des hinteren Bereichs (20b) und ist zumindest teilweise in das hintere Ende (10b) des Hauptkorpus (10) eingesetzt.

5. Set gemäß einem der vorigen Ansprüche, wobei für jeden Kupplungsstecker (1) die Dichtung (50) in einer Aufnahme aufgenommen ist, die durch Nuten gebildet wird, die sich auf dem Hauptkorpus (10) und dem Adapter (20), an der Übergangsstelle zwischen dem Hauptkorpus (10) und dem Adapter (20) befinden.

6. Set gemäß einem der vorigen Ansprüche, wobei für jeden Kupplungsstecker der Hauptkorpus (10) eine Gleitringdichtung (13) aufweist, die in einer Aufnahme in dem Hauptkorpus (10) eingesetzt ist.

7. Set gemäß einem der vorigen Ansprüche, wobei für jeden Kupplungsstecker (1) der Ventilkörper (40) zumindest teilweise in den Innengleiter (30), der gegenüber dem Hauptkorpus (10) axial verschieblich ist, eingesetzt ist.

8. Set gemäß einem der vorigen Ansprüche, wobei jeder Kupplungsstecker (1) weiter zumindest einen O-Ring (14) aufweist, der zwischen dem Innengleiter (30) und dem Hauptkorpus (10) eingefügt und geeignet ist, eine Flüssigkeitsdichtigkeit zu erreichen.

9. Multikupplungs-Vorrichtung, aufweisend eine bewegliche Platte (300) und ein Set (100) gemäß einem der Ansprüche 1 bis 8, die auf der beweglichen Platte (300) installiert ist, wobei die bewegliche Platte die Kupplungsstecker (1) trägt, und eine fixe Platte (200) Kupplungsbuchsen (201) trägt, die geeignet sind, mit den Kupplungssteckern (1) verbunden zu werden.

## Revendications

1. Ensemble (100) pour dispositifs à plaques multiples du type comprenant une première plaque fixe (200) supportant des raccords femelles (201) et une seconde plaque mobile (300) supportant des raccords mâles (1) conçus pour être raccordés aux raccords femelles (201), ledit ensemble étant conçu pour être installé sur ladite plaque mobile (300) et comprenant une plaque de raccord (60) comprenant une pluralité d'assises servant à supporter une pluralité de raccords mâles (1), la plaque de raccord (60) comprenant en outre au moins un conduit de dérivation (60a), l'ensemble (100) comprenant en outre une pluralité de raccords mâles (1), insérés dans lesdites assises, chacun desdits raccords mâles (1) comprenant au moins un corps principal (10) et un adaptateur (20) présentant tous deux une forme creuse sensiblement cylindrique et s'étendant longitudinalement, dans lequel ledit corps principal (10) comprend une extrémité avant (10a), conçue pour venir en prise avec un raccord femelle (201), et une extrémité arrière (10b), à laquelle ledit adaptateur (20) est raccordé, chacun desdits raccords mâles (1) comprenant en outre, à l'intérieur dudit corps principal (10) et pouvant coulisser axialement par rapport à celui-ci, au moins un corps de soupape (40) et au moins une glissière interne (30), dans lequel ledit corps principal (10) comprend en outre au moins un trou traversant radial (11), qui coopère avec le conduit de dérivation (60a) pour raccorder la partie interne du raccord (1) avec le conduit de dérivation (60a) pour dériver un fluide transporté par le raccord (1), et dans lequel, sur la surface interne dudit corps principal (10) et à côté dudit trou radial (11), est placé au moins un joint d'étanchéité (50) conçu pour obtenir de façon sélective une étanchéité au fluide en raccord avec la surface externe de ladite glissière interne (30), ledit ensemble étant ainsi conçu pour fournir à ladite plaque mobile (300) une fonction de dérivation.

2. Ensemble selon la revendication précédente, dans lequel, pour chacun desdits raccords mâles (1), ledit joint d'étanchéité (50) est un joint à lèvre présentant un profil en forme de L le long d'un plan de section longitudinale.

3. Ensemble selon la revendication précédente, dans lequel, pour chacun desdits raccords mâles (1), ledit joint à lèvre (50) comprend un premier élastique (50a), qui s'étend dans une direction sensiblement longitudinale vers l'extrémité arrière (10b) du raccord, et un second élastique (50b), qui s'étend dans une direction sensiblement radiale vers l'axe longitudinal du raccord, ledit second élastique (50b) dudit joint à lèvre (50) étant conçu de façon à venir en contact de façon sélective avec la surface externe de ladite glissière interne (30), fermant ainsi le passage d'un fluide transporté par le raccord (1) vers ledit au moins un trou radial (11) placé dans ledit corps principal (10).

4. Ensemble selon une ou plusieurs des revendications précédentes, dans lequel, pour chacun desdits raccords mâles (1), ledit adaptateur (20) comporte une partie avant (20a) de l'adaptateur et une partie arrière (20b) de l'adaptateur, ladite partie avant (20a) dudit adaptateur (20) présentant un diamètre externe inférieur à celui de la partie arrière (20b) et étant insérée au moins en partie dans l'extrémité arrière (10b) dudit corps principal (10).

5. Ensemble selon une ou plusieurs des revendications précédentes, dans lequel, pour chacun desdits raccords mâles (1), ledit joint d'étanchéité (50) est logé dans une assise formée par des rainures présentes sur ledit corps principal (10) et sur ledit adaptateur (20), à l'interface entre le corps principal (10) et l'adaptateur (20).

6. Ensemble selon une ou plusieurs des revendications précédentes, dans lequel, pour chacun desdits raccords mâles, ledit corps principal (10) comprend un joint d'étanchéité de surface (13) inséré dans une assise de logement obtenue sur ledit corps principal (10).

7. Ensemble selon une ou plusieurs des revendications précédentes, dans lequel, pour chacun desdits raccords mâles (1), ledit corps de soupape (40) est au moins partiellement inséré à l'intérieur de ladite glissière interne (30), qui peut se déplacer axialement par rapport audit corps principal (10).

8. Ensemble selon une ou plusieurs des revendications précédentes, dans lequel chacun desdits raccords mâles (1) comprend en outre au moins un joint torique (14) interposé entre ladite glissière interne (30) et ledit corps principal (10) conçu pour obtenir l'étanchéité au fluide.

9. Dispositif multiple comprenant une plaque mobile (300), un ensemble (100) selon l'une quelconque des revendications 1 à 8 installé sur ladite plaque mobile, (300), la plaque mobile supportant les raccords mâles (1) et une plaque fixe (200) supportant des raccords femelles (201) conçus pour être raccordés aux raccords mâles (1).
